# FASCICULE DE BREVET EUROPEEN

(11) **EP 2 371 713 B1**
(45) Date de publication et mention de la délivrance du brevet: **21.08.2013**
(21) Numéro de dépôt: 11160088.8
(22) Date de dépôt: 28.03.2011
(51) Int. Cl.: B64D 27/26

(54) **Système d'axe pour ensemble de liaison d'un mât-réacteur sous une voilure d'aéronef**
Achssystem zur Verbindung eines Pylons unter einer Tragfläche eines Luftfahrzeugs
System of pins for a mounting assembly of an engine pylon under an aircraft wing

(30) Priorité: 02.04.2010 FR 1052537
(43) Date de publication de la demande: 05.10.2011
(73) Titulaire: AIRBUS OPERATIONS (S.A.S), 31060 Toulouse (FR)
(72) Inventeur: Combes, Stéphane, 31660 Buzet-sur-Tarn (FR); Gardes, Pascal, 31600 Lherm (FR)
(74) Mandataire: Marconnet, Sébastien

(56) Documents cités:
- EP-A1- 1 535 837
- FR-A1- 2 915 178
- US-A- 2 402 693
- US-A- 3 831 888
- US-A1- 2009 108 127

## Description

### Domaine de l'invention

L'invention concerne un système d'axe destiné à un ensemble de liaison d'un mât-réacteur sous une voilure d'aéronef. Ce système d'axe ne requière qu'un seul espace de manoeuvre et un espace d'accès pour son installation.

L'invention trouve des applications dans le domaine de l'aéronautique et, en particulier, dans le domaine des liaisons sécurisées entre un mât-réacteur et une voilure.

### Etat de la technique

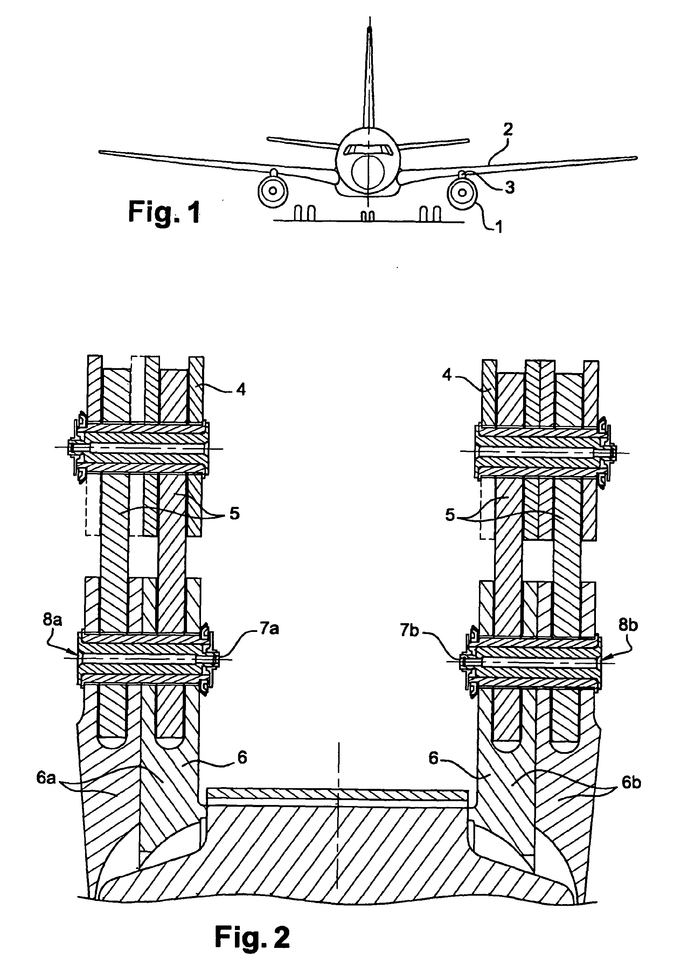

Dans la plupart des aéronefs, le réacteur est fixé sous la voilure de l'aéronef au moyen d'une structure appelée mât-réacteur. Un exemple d'aéronef ayant un réacteur 1 monté sous la voilure 2 est représenté sur la figure 1. Comme sur la plupart des aéronefs, la voilure 2 comporte une ferrure à l'intérieur de laquelle est emboîtée une chape du mât-réacteur 3. Classiquement, la chape du mât 3 est fixée dans la ferrure de la voilure 2 au moyen d'un système d'axe installé par coulissement. Dans la plupart des aéronefs, lorsque le système d'axe est installé à travers la ferrure et la chape, pour les maintenir assemblés, un verrouillage du système est réalisé pour éviter tout risque de coulissement dudit système d'axe pendant le vol de l'aéronef. Ce verrouillage est réalisé au moyen d'écrous placés et serrés de part et d'autre du système d'axe pour bloquer ledit système à l'intérieur de la ferrure et de la chape.

Pour des raisons de sécurité, il est usuel, dans un aéronef, de doubler tous les éléments de structure indispensables à l'aéronef. Ainsi, tous les chemins de passage des efforts, dans une structure, sont redondants afin d'assurer l'intégrité de la structure si un des éléments de passage des efforts vient à se rompre. En particulier, dans les ensembles de liaison entre mât-réacteur et voilure, il est usuel d'utiliser un système à double axe qui assure la transmission des efforts par le second axe, si l'axe principal est défaillant. Pour ces raisons, un système d'axe classique comporte un axe principal extérieur et un axe secondaire intérieur, monté au sein de l'axe principal. L'axe principal et l'axe secondaire sont concentriques. Dans un tel système d'axe classique, une tige est placée au centre du système d'axe, traversant l'axe secondaire de part en part. Cette tige est équipée, à chacune de ses extrémités, d'un filetage sur lequel est monté un écrou. Chacun de ces écrous doit être serré pour que le verrouillage du système d'axe soit assuré.

Sur la figure 2, on a représenté un exemple d'assemblage classique d'une chape 5 de mât-réacteur et d'une ferrure 6 de voilure. Dans cet exemple, comme dans de nombreux aéronefs, le mât-réacteur comporte une pyramide 4 installée entre deux parties 6a, 6b de la ferrure 6 de la voilure. Généralement, les deux parties 6a, 6b de la ferrure 6 sont relativement espacées l'une de l'autre. L'espace de manoeuvre entre les deux parties de ferrure est alors suffisamment grand pour permettre à un opérateur de passer un outil, tel qu'une clé ou un torque, afin de serrer les écrous 7a, 7b de verrouillage des systèmes d'axe respectifs 8a, 8b.

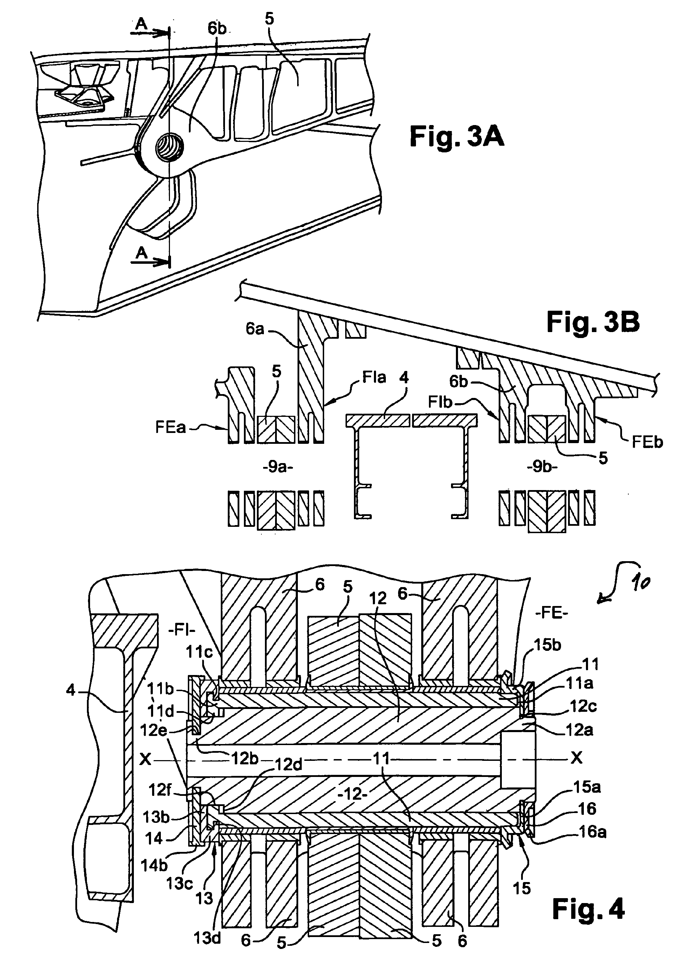

Cependant, dans certains aéronefs, la structure de l'ensemble de liaison est telle que la pyramide 4 se situe entre deux systèmes d'axe. Un exemple d'une telle structure est représenté sur les figures 3A et 3B. Sur ces figures, on voit la pyramide 4 placée entre les emplacements 9a, 9b réservés chacun à un système d'axe. Cette figure montre que l'espace entre la pyramide 4 du mât et les deux parties 6a, 6b de la ferrure 6 est relativement étroit et, par conséquent, difficilement accessible par un opérateur. Il est donc impossible, à un opérateur équipé d'une clé ou d'un torque, de serrer des écrous situés à l'extrémité intérieure du système d'axe, c'est-à-dire sur la face du système d'axe située en regard de la pyramide 4. Le manque d'accessibilité de cette structure empêche donc le verrouillage d'un système d'axe classique.

Un exemple de l'art antérieur est fourni par le document US 2009/0108127 A1.

### Exposé de l'invention

L'invention a justement pour but de remédier aux inconvénients des techniques exposées précédemment. A cette fin, l'invention propose un ensemble de liaison d'un mât-réacteur sous une voilure d'aéronef, dans lequel un seul espace de manoeuvre est suffisant pour y verrouiller un système d'axe traversant, un espace de passage étant suffisant à une extrémité opposée pour faire glisser une rondelle d'arrêt. Le système d'axe de l'invention est de type semi-aveugle : il est inséré à partir d'un coté de la ferrure et verrouillé depuis de ce même coté.

Pour cela, le système d'axe de l'invention comporte des épaulements montés simplement, sans outil, aux extrémités aveugles des axes pour assurer le maintien en position desdits axes et des moyens de verrouillage montés au moyen d'outils autour des extrémités libres des axes.

De façon plus précise, l'invention concerne un ensemble de liaison d'un mât réacteur sous une voilure d'aéronef, la voilure comportant une ferrure, le mât réacteur comportant une chape emboitée dans la ferrure et fixée à ladite ferrure au moyen d'un système d'axe traversant. Cet ensemble de liaison se caractérise par le fait que le système d'axe comporte :
- un axe principal extérieur,
- un axe secondaire monté à l'intérieur de l'axe principal,
- un épaulement principal monté directement autour de l'axe principal, à une extrémité aveugle du système d'axe, pour bloquer ledit axe en translation,
- un épaulement secondaire monté autour d'une extrémité de l'axe secondaire, à une extrémité aveugle du système d'axe, pour bloquer le système en rotation,
- un ensemble de verrouillage monté autour de l'axe principal et de l'axe secondaire, à une extrémité libre du système d'axe, pour bloquer le système d'axe en translation.

L'ensemble de liaison de l'invention peut comporter une ou plusieurs des caractéristiques suivantes :
- l'épaulement principal a une forme annulaire aplatie avec un orifice central et un rebord extérieur apte à s'insérer au moins partiellement dans une gorge de l'axe principal.
- l'épaulement secondaire a une forme de disque muni d'une ouverture latérale oblongue décentrée apte à s'insérer autour de l'extrémité aveugle de l'axe secondaire.
- l'épaulement principal a une forme de rondelle avec un orifice central et au moins un détrompeur assurant un maintien de l'épaulement dans une gorge de l'axe principal.
- l'épaulement secondaire a une forme de disque muni d'une ouverture centrale de forme complémentaire de celle d'une face aveugle de l'axe secondaire.
- l'axe secondaire comporte une gorge apte à recevoir l'épaulement secondaire.
- l'épaulement secondaire comporte un débord longitudinal recouvrant au moins partiellement le rebord extérieur de l'épaulement principal.
- l'extrémité aveugle de l'axe secondaire comporte au moins un replat apte à venir en contact contre un replat l'épaulement principal et/ou un replat de l'axe principal.
- l'ensemble de verrouillage comporte un écrou principal vissé autour d'une extrémité libre de l'axe secondaire et un écrou secondaire monté autour de cette même une l'extrémité libre de l'axe secondaire.
- l'écrou principal comporte une partie annulaire munie d'un pas de vis et un rebord à ailette recouvrant partiellement l'extrémité libre de l'axe principal.

L'invention concerne également un procédé d'installation d'un ensemble de liaison tel que décrit précédemment. Ce procédé se caractérise par le fait qu'il comporte les opérations suivantes :
- installation de la chape du mât dans la ferrure de la voilure,
- coulissement de l'axe principal à travers la chape et la ferrure depuis une face libre de la ferrure, jusqu'à une face aveugle de ladite ferrure,
- installation de l'épaulement principal autour de l'extrémité aveugle de l'axe principal,
- coulissement de l'axe secondaire à l'intérieur de l'axe principal,
- installation de l'épaulement secondaire autour de l'extrémité aveugle de l'axe secondaire,
- vissage de l'écrou principal autour de l'extrémité libre de l'axe secondaire, et
- installation de l'écrou secondaire autour de l'extrémité libre de l'axe secondaire.

L'invention concerne également un aéronef équipé d'un mât-réacteur et d'une voilure sous laquelle est fixée le mât-réacteur. Un système d'axe assure la liaison entre le mât-réacteur et la voilure. Ce système d'axe est conforme à la description précédente.

### Brève description des dessins

La figure 1, déjà décrite, représente un aéronef avec une voilure et un réacteur fixé sous la voilure par l'intermédiaire d'un mât-réacteur.
La figure 2, déjà décrite, représente un exemple d'ensemble de liaison classique dans lequel les deux faces de la ferrure sont accessibles.
Les figures 3A et 3B représentent un exemple d'ensemble de liaison dans lequel l'espace d'accès à l'une des faces de la ferrure est trop réduit pour permettre la manoeuvre d'un outil.
La figure 4 représente une vue en coupe d'un système d'axe selon l'invention.
Les figures 5A à 5F représentent différentes étapes d'assemblage du système d'axe de l'invention.
Les figures 6A à 6F représentent différentes étapes de montage du système d'axe de l'invention dans l'ensemble de liaison des figures 3A, 3B.
La figure 7 montre le système d'axe de la figure 4 avec les chemins de passage des efforts principal et de secours.
Les figures 8A à 8H représentent différentes étapes d'assemblage du système d'axe selon un second mode de réalisation de l'invention.
Les figures 9A à 9F représentent différentes étapes de montage du système d'axe des figures 8A à 8H dans l'ensemble de liaison des figures 3A, 3B.

### Description détaillée de modes de réalisation de l'invention

L'invention concerne un système d'axe traversant pouvant être installé dans un ensemble de liaison présentant un espace restreint entre les deux parties de ferrure. Ce système d'axe est un système semi-aveugle, pouvant être installé à partir d'une seule face de manoeuvre de la ferrure, un espace de passage étant suffisant le long de l'autre face pour permettre le verrouillage du système.

Dans toute la description qui va suivre, il sera fait référence à la face extérieure et la face intérieure de la ferrure, la face extérieure étant la face de manoeuvre depuis laquelle l'opérateur peut installer le système et manoeuvrer ses outils, et la face intérieure étant la face située en regard de la pyramide du mât-réacteur et offrant un espace réduit permettant simplement le passage de la main de l'opérateur. La face intérieure est appelée également face aveugle. La face extérieure est appelée aussi face libre.

Dans l'exemple des figures 3A et 3B, un premier système d'axe selon l'invention est installé dans l'emplacement 9a depuis la face extérieure FEa de la ferrure 6a et un second système d'axe est mis en place dans l'emplacement 9b depuis la face extérieure FEb de la ferrure 6b. Le premier système d'axe est verrouillé dans son emplacement 9a au niveau de la face intérieure Fla de la ferrure 6a ; le second système d'axe est verrouillé dans son emplacement 9b au niveau de la face intérieure Flb de la ferrure 6b. Le système d'axe selon l'invention est mis en place par coulissement dans la ferrure 6, depuis la face extérieure FE de la ferrure vers la face intérieure FI de ladite ferrure et par installation d'épaulements dans l'espace d'accès entre la pyramide 4 et la face intérieure FI. Une fois en place, le système d'axe est verrouillé dans la ferrure, uniquement depuis son coté situé sur la face extérieure FE.

Un exemple du système d'axe de l'invention est représenté sur la figure 4, selon une vue en coupe. Ce système d'axe comporte un axe principal 11 et un axe secondaire 12, concentriques, sensiblement identiques aux axes principal et secondaire du système classique décrit précédemment, excepté à leurs extrémités.

L'extrémité libre 11 a de l'axe principal, c'est-à-dire son extrémité située sur la face extérieure FE de la ferrure, est droite. Par contre, son extrémité aveugle 11 b, située sur la face intérieure FI de la ferrure, comporte, sur sa face externe située en regard de la ferrure, une gorge radiale 11 c destinée à recevoir un rebord de l'épaulement principal 13 décrit ultérieurement. L'extrémité aveugle 11 b de l'axe principal 11 comporte, en outre, sur sa face interne en contact avec l'axe secondaire 12, un débord radial 11 d destiné à assurer une butée de l'axe secondaire contre de l'axe principal.

L'axe secondaire 12 comporte, à son extrémité libre 12a, une première échancrure 12c permettant l'insertion de l'écrou principal 15 décrit ultérieurement. Il comporte, à son extrémité aveugle 12b, une deuxième échancrure 12d formant, avec le débord 11 d de l'axe principal, un ensemble de type tenon-mortaise assurant l'emboitement de l'axe secondaire dans l'axe principal lors de sa mise en place. L'extrémité aveugle 12b de l'axe secondaire comporte, en outre, une gorge radiale 12e destinée à recevoir l'épaulement secondaire 14 qui sera décrit ultérieurement.

Le système d'axe de l'invention comporte, en outre, un ensemble d'arrêt constitué de deux épaulements 13 et 14 imbriqués l'un dans l'autre. L'épaulement principal 13 assure le blocage en translation de l'axe principal 11. L'épaulement secondaire 14 assure le blocage en translation de l'axe secondaire 12.

Pour cela, l'épaulement principal 13 a une forme de rondelle de diamètre adapté au diamètre extérieur de l'axe principal 11. Plus précisément, l'épaulement principal 13 a une forme annulaire aplatie avec un orifice central 13a. Le diamètre de cet orifice central 13a est identique au diamètre intérieur de l'axe principal à son extrémité aveugle 11 b. En outre, le diamètre extérieur de l'épaulement principal 13 est sensiblement identique au diamètre extérieur de l'axe principal 11 à son extrémité aveugle.

L'épaulement principal 13 a une forme de capuchon comportant :
- un disque 13b dont la surface correspond sensiblement à l'épaisseur de l'axe principal,
- un rebord extérieur 13d avec un retour 13c apte à s'insérer dans la gorge 11c de l'axe principal.

La gorge 11 c de l'axe principal 11 et le rebord 13d de l'épaulement principal 13 comportent chacun un système de fixation par rotation, complémentaires l'un de l'autre et permettant de verrouiller l'épaulement principal 13 autour de l'axe principal 11. Ce système de fixation par rotation peut être, par exemple, un pas de vis ou un système à baïonnette.

L'épaulement principal 13, avec son rebord 13d, a une dimension suffisante pour constituer une butée apte à bloquer l'ensemble du système d'axe en translation par rapport à la ferrure, depuis l'extrémité aveugle vers l'extrémité libre de ladite ferrure.

L'orifice central de l'épaulement principal 13 est équipé, sur sa circonférence, d'au moins un replat 13e. De même, l'extrémité aveugle de l'axe secondaire 12 comporte au moins un replat 12f, sur l'échancrure 12d. Le replat 12f de l'axe secondaire est destiné à venir en contact contre le replat 13e de l'épaulement principal 13 afin d'assurer le blocage en rotation de l'axe secondaire avec l'épaulement, ce qui induit le blocage en rotation de l'ensemble d'arrêt 13, 14 avec les axes principal et secondaire.

L'épaulement secondaire 14 a une forme de disque muni d'une ouverture latérale oblongue 14a. Cette ouverture oblongue 14a est décentrée dans le disque 14 : elle part du centre du disque et s'étend sur tout le rayon du disque, de sorte que l'épaulement a la forme d'un C. Cette ouverture oblongue 14a permet l'insertion de l'épaulement 14 autour de l'extrémité aveugle 12b de l'axe secondaire 12.

La largeur de cet orifice oblong 14a est adaptée à l'épaisseur de l'axe secondaire à l'emplacement de la gorge 12e. Plus précisément, la largeur de l'ouverture oblongue 14a est sensiblement supérieure l'épaisseur de l'axe secondaire dans la gorge 12e.

Comme on le verra par la suite, l'épaulement secondaire 14 est prévu pour être glissé dans la gorge 12e de l'axe secondaire 12, le long de l'épaulement principal. L'épaulement secondaire 14 peut comporter un débord longitudinal 14b dont la forme peut être opposée à celle du rebord 13d de l'épaulement principal 13 afin de verrouiller l'épaulement secondaire 14 sur l'épaulement principal 13 afin qu'il ne ressorte pas en vol.

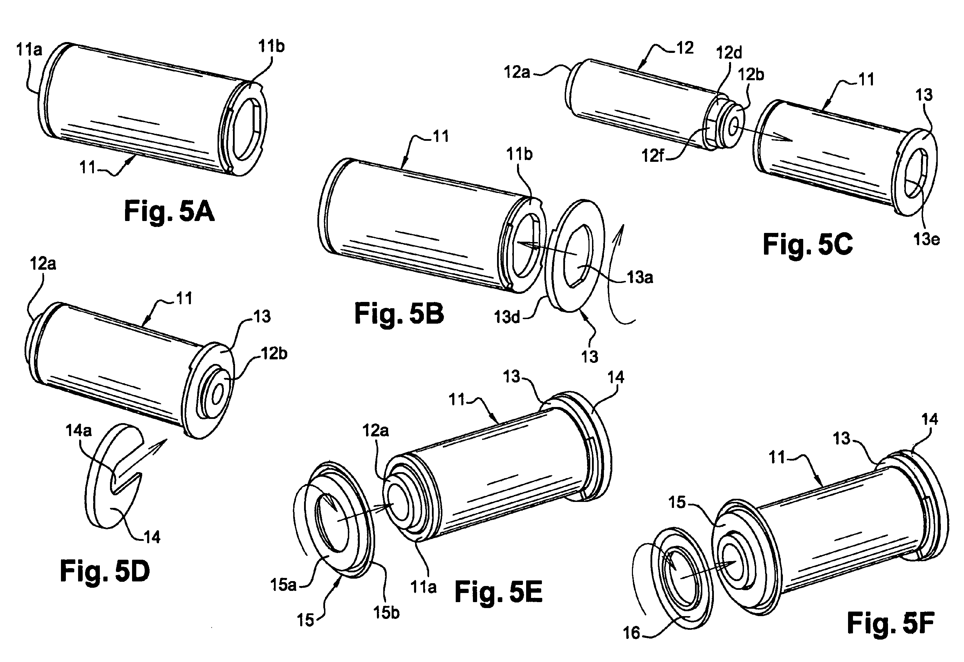

L'installation de ces épaulements 13 et 14 est représentée sur les figures 5A à 5F.

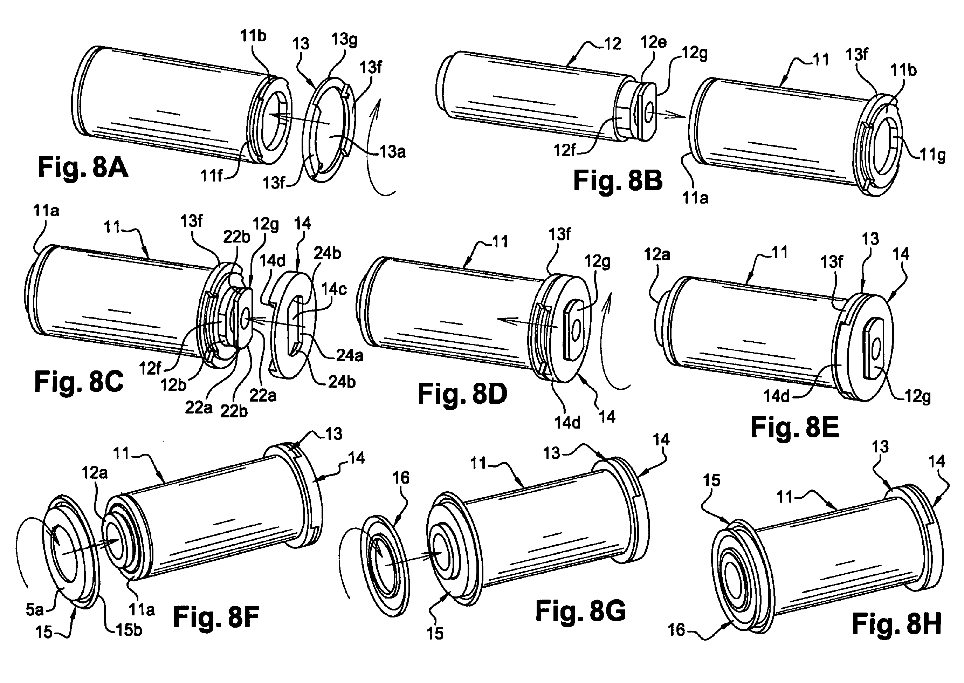

Sur les figures 8A à 8H, on a représenté différentes étapes d'installation des épaulements principal et secondaire selon un second mode de réalisation de l'invention.

Dans ce second mode de réalisation, l'épaulement principal 13 a une forme de rondelle de diamètre adapté au diamètre extérieur de l'axe principal 11. Plus précisément, l'épaulement principal 13 a une forme annulaire aplatie avec un orifice central 13a. Le diamètre de cet orifice central 13a est identique au diamètre de la gorge 11 c de l'axe principal. L'épaulement principal 13 a comporte :
- une bague 13g dont la surface correspond sensiblement à l'épaisseur de l'axe principal et dont l'orifice est de taille adaptée pour s'insérer dans la gorge 11 c de l'axe principal,
- au moins un détrompeur 13f (par exemple deux dans l'exemple des figures 8) formé d'une bague partielle surmontant la bague 13g et de surface sensiblement supérieure à celle de la bague 13g de façon à ce que, à l'emplacement de la bague partielle, le diamètre de l'orifice central 13a soit sensiblement plus étroit que celui de la gorge 11 c.

L'extrémité 11 b de l'axe principal comporte des encoches 11 qui offrent, à l'axe principal, un diamètre extérieur identique à celui de la gorge 11 c, à l'emplacement de ces encoches. De cette façon, l'épaulement principal 13 est monté autour de l'axe principal en faisant coïncider les détrompeurs 13f avec les encoches 11 f. Lorsque l'épaulement principal 13 est en place autour de l'axe principal 11, une rotation, par exemple de 90°, permet de le verrouiller autour dudit axe, les détrompeurs 13f assurant un maintien de l'épaulement 13 dans la gorge 11c.

L'épaulement principal 13 a une dimension suffisante pour constituer une butée apte à bloquer l'ensemble du système d'axe en translation par rapport à la ferrure, depuis l'extrémité aveugle vers l'extrémité libre de ladite ferrure.

Dans ce mode de réalisation, l'extrémité aveugle de l'axe secondaire 12 comporte au moins un replat 12f, sur l'échancrure 12d. Le replat 12f de l'axe secondaire est destiné à venir en contact contre le replat 11 g réalisé dans la paroi interne de l'axe principal 11, à son extrémité aveugle 11 b, afin d'assurer le blocage en rotation de l'ensemble d'arrêt 13, 14 avec les axes principal et secondaire.

En outre, l'extrémité aveugle 12b de l'axe secondaire 12 comporte une face aveugle 12g de forme non circulaire destinée à s'insérer dans un épaulement secondaire 14 décrit par la suite. La forme de la face aveugle 12g peut être, par exemple, une forme ovale ou une forme oblongue, comme montré sur les figures 8B et 8C, comportant deux cotés parallèles rectilignes 22a reliés par deux cotés courbes 22b.

Dans ce mode de réalisation, l'épaulement secondaire 14 a une forme de disque muni d'une ouverture centrale 14c. Cette ouverture centrale 14c a une forme complémentaire de celle de la face aveugle 12g de l'axe secondaire 12. Dans l'exemple des figures 8A à 8H, cette ouverture centrale 14c a une forme oblongue dont le contour a une dimension adaptée pour s'emboiter autour de la face aveugle 12g de l'axe secondaire.

Cette ouverture centrale 14c permet l'insertion de l'épaulement 14 autour de l'extrémité aveugle 12b de l'axe secondaire 12.

L'épaulement secondaire 14 comporte en outre au moins un rebord partiel longitudinal 14d dont la forme et la hauteur sont complémentaires des zones de la bague 13g situées entre les détrompeurs 13f de l'épaulement principal 13. De préférence, il comporte deux rebords partiels longitudinaux 14d en regard l'un de l'autre.

Ainsi, lorsque l'axe secondaire 12 est inséré dans l'axe principal 11 avec les replats 12f et 11 g qui coïncident, l'extrémité aveugle 12b de l'axe principal s'étend hors de l'axe principal 11. L'épaulement secondaire 14 peut alors être monté autour de cette extrémité aveugle 12b de façon à ce que son orifice central 14c soit emboité autour de la face aveugle 12g de l'axe secondaire. Les rebords partiels longitudinaux 14d sont alors positionnés face aux détrompeurs 13f de l'épaulement principal 13, comme montré sur la figure 8D.

Pour positionner définitivement l'épaulement secondaire 14, on lui fait subir une rotation, par exemple de 90°, de façon à ce que les rebords partiels longitudinaux 14d de l'épaulement secondaire 14 s'emboitent entre les détrompeurs 13f de l'épaulement principal 13 de façon à verrouiller l'épaulement secondaire 14 sur l'épaulement principal 13. Cette rotation de l'épaulement secondaire 14 entraine le déplacement de l'axe secondaire 12 à l'intérieur de l'axe principal 11, de la face aveugle vers la face libre, comme montré sur la figure 8E. La face libre 12a de l'axe secondaire s'étend alors hors de l'axe principal 11.

Quel que soit le mode de réalisation, l'extrémité libre 12a de l'axe secondaire est alors apte à recevoir un ensemble de verrouillage 15, 16. Cet ensemble de verrouillage 15, 16 est ainsi installé à l'extrémité 12a de l'axe secondaire, c'est-à-dire à l'extrémité située sur la face extérieure FE de la ferrure, pour assurer le blocage en translation du système depuis la face extérieure FE vers la face intérieure FI de la ferrure.

Cet ensemble de verrouillage comporte un écrou principal 15 vissé autour de l'extrémité libre de l'axe secondaire 12 et un écrou secondaire 16 vissé également autour de l'extrémité libre de l'axe secondaire 12.

L'écrou principal 15 a une forme classique d'écrou à vis avec :
- une partie annulaire 15a de dimension suffisante pour recouvrir l'extrémité 11 a de l'axe principal et équipée, sur sa circonférence interne, d'un pas de vis apte à être vissé autour de l'extrémité libre 11 a de l'axe principal, et
- un rebord à ailette 15b recouvrant partiellement l'extrémité libre 11 a de l'axe principal et formant une butée apte à bloquer l'ensemble du système d'axe en translation par rapport à la ferrure, depuis l'extrémité libre vers l'extrémité aveugle de ladite ferrure.

L'écrou secondaire 16 a une forme de couronne munie, sur sa circonférence interne, d'un pas de vis apte à être vissé autour de l'extrémité libre de l'axe secondaire 12. L'écrou secondaire peut comporter un rebord 16a incurvé apte à recevoir un autre élément aéronautique tel qu'un système de freinage.

Sur les figures 5A à 5F, on a représenté les différentes étapes de montage du système de l'invention. De façon plus précise, la figure 5A montre, selon une vue de profil, l'axe principal 11 avec son extrémité aveugle 11b et son extrémité libre 11a.

La figure 5B montre l'étape d'installation de l'épaulement principal 13 autour de l'extrémité aveugle 11 b de l'axe principal : l'épaulement principal 13 est glissé par l'opérateur le long de l'extrémité aveugle 11 b de l'axe principal ; il est ensuite emboité autour de ladite extrémité 11 b puis tourné d'un angle d'environ 90° afin d'être verrouillé autour de l'axe principal.

Comme montré sur la figure 5C, l'axe secondaire 12 est ensuite inséré dans l'axe principal 11 par coulissement depuis la face libre dudit axe. L'axe secondaire 12 est ainsi coulissé jusqu'à ce que l'échancrure 12d dudit axe secondaire entre en butée contre le débord 11 d de l'axe principal 11. Lorsque l'axe secondaire 12 est en butée dans l'axe principal 11, son replat 12f se trouve en contact contre le replat 13e de l'épaulement principal et son extrémité aveugle 12b sort de l'épaulement principal 13 par l'orifice central dudit épaulement.

Cette position de l'axe secondaire, après installation dans l'axe principal, est représentée sur la figure 5D. Cette figure 5D montre également l'installation de l'épaulement secondaire 14 autour de l'extrémité aveugle 12b de l'axe secondaire. Cet épaulement secondaire 14 est monté par glissement le long de l'épaulement principal 13, autour de la gorge 12e de l'axe secondaire.

La figure 5E montre une vue d'un profil du système d'axe de l'invention opposé au profil montré sur les figures 5A à 5D. Cette vue du système d'axe de l'invention montre l'axe secondaire et l'axe principal depuis leur face libre. Elle montre également l'écrou principal 15 qui est monté autour des extrémités libres 12a et 11a des axes secondaire et principal puis vissé autour de l'extrémité 11a. L'écrou secondaire 16 est ensuite vissé autour de cette extrémité 12a, comme montré sur la figure 5F. Lorsque les deux écrous 15 et 16 sont vissés, le système d'axe de l'invention est verrouillé de sorte que l'ensemble du système est bloqué aussi bien en translation qu'en rotation.

Il ressort de ces figures 5A à 5F que la grande majorité des opérations de montage du système de l'invention sont effectuées depuis la face libre du système, ou face extérieure de la ferrure. Seuls le glissement des épaulements et une courte rotation de l'épaulement principal sont effectués depuis la face aveugle du système, ou face intérieure de la ferrure. Or, ces opérations de glissement et de courte rotation sont exécutées à main libre par l'opérateur, c'est-à-dire sans aucun outil. Ainsi, même si l'espace situé entre la ferrure et la Pyramide est trop étroit pour permettre la manoeuvre d'un outil, il est suffisant pour le passage de la main de l'opérateur et donc pour le montage du système de l'invention.

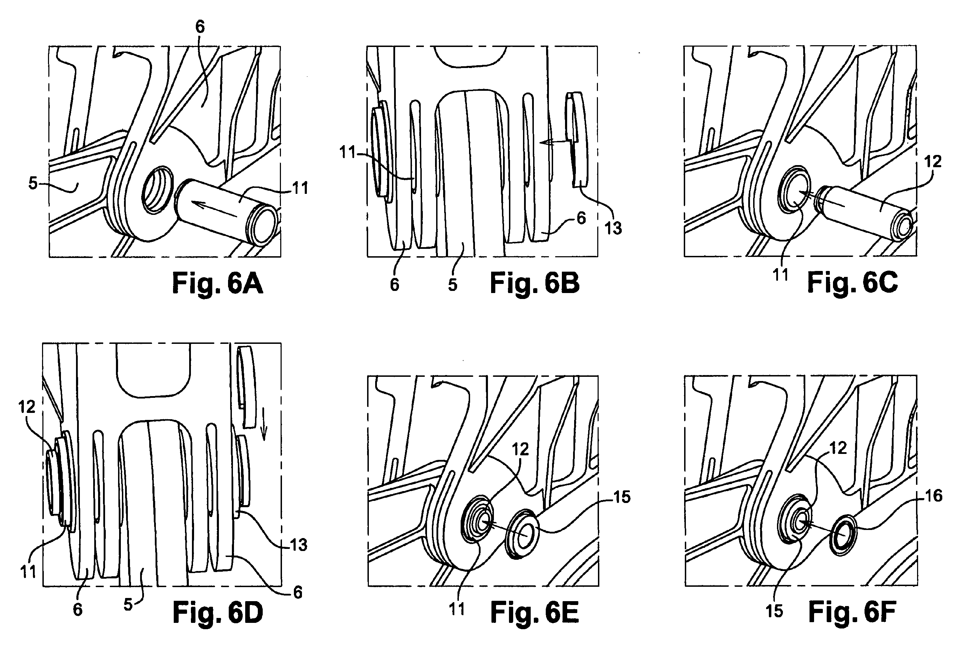

Sur les figures 6A à 6F, on a représenté les différentes étapes d'installation du système de l'invention dans une ferrure sous voilure. La figure 6A montre une vue en perspective de la mise en place de l'axe principal 11 à travers des orifices de la ferrure 6 et de la chape 5, depuis l'espace de manoeuvre situé du coté de la face extérieure de la ferrure.

La figure 6B montre une vue de derrière du système lors de la mise en place de l'épaulement principal 13 par glissement depuis l'espace de passage situé entre la ferrure 6 et la pyramide 4.

La figure 6C montre une vue en perspective du système de la figure 6B lors de l'insertion de l'axe secondaire 12. La figure 6D montre une vue de derrière du système de la figure 6C lorsque l'épaulement secondaire 14 est glissé le long de l'épaulement principal 13, dans l'espace de passage situé entre la ferrure 6 et la pyramide 4.

La figure 6E montre une vue en perspective du système de l'invention lors de la mise en place du verrou principal 15 autour de l'extrémité libre des axes principal et secondaire. La figure 6F représente la vue de la figure 6E lors de la mise en place du verrou secondaire 16.

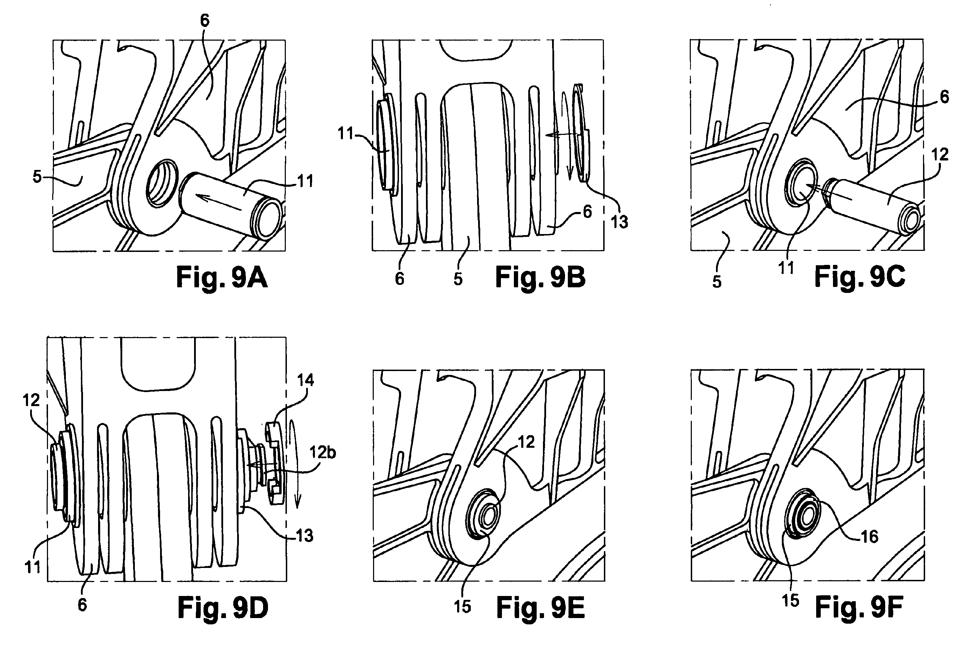

Sur les figures 9A à 9F, on a représenté les différentes étapes d'installation du système selon le mode de réalisation des figures 8, dans une ferrure sous voilure. La figure 9A montre une vue en perspective de la mise en place de l'axe principal 11 à travers des orifices de la ferrure 6 et de la chape 5, depuis l'espace de manoeuvre situé du coté de la face extérieure de la ferrure.

La figure 9B montre une vue de derrière du système lors de la mise en place de l'épaulement principal 13 par glissement depuis l'espace de passage situé entre la ferrure 6 et la pyramide 4.

La figure 9C montre une vue en perspective du système de la figure 9B lors de l'insertion de l'axe secondaire 12. La figure 9D montre une vue de derrière du système de la figure 9C lorsque l'épaulement secondaire 14 est installé autour de la face aveugle de l'axe secondaire, dans l'espace de passage situé entre la ferrure 6 et la pyramide 4, puis tourné de façon à déplacer l'axe secondaire vers la face extérieure de la ferrure.

La figure 9E montre une vue en perspective du système de l'invention lors de la mise en place du verrou principal 15 autour de l'extrémité libre des axes principal et secondaire. La figure 9F représente la vue de la figure 9E lors de la mise en place du verrou secondaire 16.

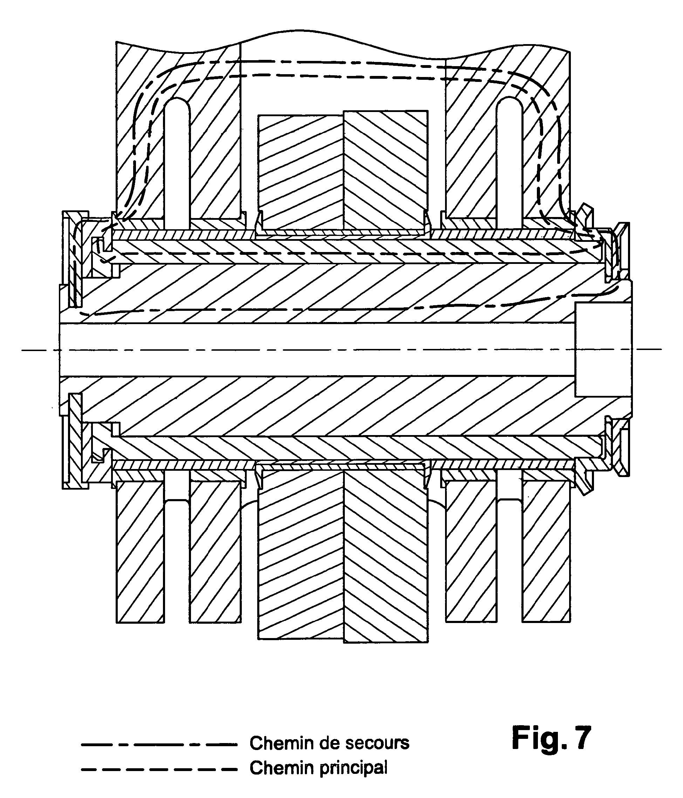

On comprend des dessins décrits précédemment que la contrainte aérodynamique relative à la redondance des chemins de passage des efforts est respectée par le système de l'invention. Sur la figure 7, on a représenté en traits pointillés le chemin principal de passage des efforts et, en traits mixtes, le chemin de passage de secours. En effet, avec le système de l'invention, le chemin principal de passage des efforts passe par la ferrure 6, traverse l'épaulement principal 13 puis l'axe principal 11 dans toute sa longueur, l'écrou principal 15 puis repart vers la ferrure 6. Le chemin de secours de passage des efforts passe par la ferrure 6, traverse longitudinalement l'épaulement principal 13, traverse radialement l'épaulement secondaire 14, traverse l'axe secondaire 12 sur toute sa longueur puis l'écrou secondaire 16 et l'écrou principal 15 et repart vers la ferrure 6. Le système de l'invention permet donc de respecter la redondance du passage des efforts dans la structure de liaison entre mât réacteur et voilure. Il permet, en particulier, un passage des efforts par l'axe principal du système.

## Revendications

1. Ensemble de liaison entre un mât réacteur et une voilure d'aéronef, comportant :
- une ferrure (6) solidaire de la voilure, et
- une chape (5) solidaire du mât réacteur, la chape (5) étant emboitée et fixée dans la ferrure (6) au moyen d'un système d'axe traversant (10), comportant
- un axe principal extérieur (11),
- un axe secondaire (12) monté à l'intérieur de l'axe principal,
**caractérisé en ce que** le système d'axe (10) comporte :
- un épaulement principal (13) monté directement autour de l'axe principal, à une extrémité aveugle du système d'axe, pour bloquer ledit axe en translation,
- un épaulement secondaire (14) monté autour d'une extrémité de l'axe secondaire, à une extrémité aveugle du système d'axe, pour bloquer le système en rotation,
- un ensemble de verrouillage (15, 16) monté autour de l'axe principal et de l'axe secondaire, à une extrémité libre du système d'axe, pour bloquer le système d'axe en translation.

2. Ensemble de liaison selon la revendication 1, **caractérisé en ce que** l'épaulement principal (13) a une forme annulaire aplatie avec un orifice central (13a) et un rebord extérieur (13d) apte à s'insérer au moins partiellement dans une gorge (11c) de l'axe principal.

3. Ensemble de liaison selon l'une quelconque des revendications 1 à 2, **caractérisé en ce que** l'épaulement secondaire (14) a une forme de disque muni d'une ouverture latérale oblongue (14a) décentrée apte à s'insérer autour de l'extrémité aveugle (12b) de l'axe secondaire.

4. Ensemble de liaison selon la revendication 1, **caractérisé en ce que** l'épaulement principal (13) a une forme de rondelle avec un orifice central (13a) et au moins un détrompeur (13f) assurant un maintien de l'épaulement (13) dans une gorge (11c) de l'axe principal.

5. Ensemble de liaison selon la revendication 1 ou 4, **caractérisé en ce que** l'épaulement secondaire (14) a une forme de disque muni d'une ouverture centrale (14c) de forme complémentaire de celle d'une face aveugle (12g) de l'axe secondaire (12).

6. Ensemble de liaison selon l'une quelconque des revendications 1 à 5, **caractérisé en ce que** l'axe secondaire comporte une gorge (12e) apte à recevoir l'épaulement secondaire (14).

7. Ensemble de liaison selon l'une quelconque des revendications 1 à 6, **caractérisé en ce que** l'extrémité aveugle (12b) de l'axe secondaire (12) comporte au moins un replat (12f) apte à venir en contact contre un replat (13e) de l'épaulement principal (13) et/ou un replat (11g) de l'axe principal (11).

8. Ensemble de liaison selon l'une quelconque des revendications 1 à 7, **caractérisé en ce que** l'ensemble de verrouillage (15, 16) comporte un écrou principal (15) vissé autour d'une extrémité libre (12a) de l'axe secondaire (12) et un écrou secondaire (16) monté autour de cette même une l'extrémité libre de l'axe secondaire.

9. Procédé d'installation d'un ensemble de liaison selon l'une quelconque des revendications 1 à 8, **caractérisé en ce qu'**il comporte les opérations suivantes :
- installation de la chape (5) du mât dans la ferrure (6) de la voilure,
- coulissement de l'axe principal (11) à travers la chape et la ferrure depuis une face libre de la ferrure, jusqu'à une face aveugle de ladite ferrure,
- installation de l'épaulement principal (13) autour de l'extrémité aveugle de l'axe principal,
- coulissement de l'axe secondaire (12) à l'intérieur de l'axe principal,
- installation de l'épaulement secondaire (14) autour de l'extrémité aveugle de l'axe secondaire,
- vissage de l'écrou principal (15) autour de l'extrémité libre de l'axe secondaire, et
- installation de l'écrou secondaire (16) autour de l'extrémité libre de l'axe secondaire.

10. Aéronef, **caractérisé en ce qu'**il comporte un mât réacteur fixé sous une voilure par l'intermédiaire d'un ensemble de liaison selon l'une quelconque des revendications 1 à 8.

## Patentansprüche

1. Verbindungssatz zwischen einem Strahltriebwerkstiel und einem Luftfahrzeugflügel, umfassend:
- einen Beschlag (6) integral mit dem Flügel, und
- einen Gabelgelenk (5) integral mit dem Strahltriebwerkstiel, wobei das Gabelgelenk (5) im Beschlag (6) eingefügt ist, und darin mittels eines durchgehenden Bolzen-Systems (10) befestigt ist, umfassend
- einen externen Hauptbolzen (11),
- einen Sekundärbolzen (12), der innerhalb des Hauptbolzens montiert ist,
**dadurch gekennzeichnet, dass** das Bolzen-System (10) umfasst:
- eine Hauptschulter (13), die direkt um den Hauptbolzen an einem Blindende des Bolzen-Systems zum Verhindern der Translationsbewegung des genannten Bolzens montiert ist,
- eine Sekundärschulter (14), die um ein Ende des Sekundärbolzens an einem Blindende des Bolzen-Systems zum Verhindern der Rotationsbewegung des Systems montiert ist,
- einen verriegelungssatz (15, 16), der um den Hauptbolzen und den Sekundärbolzen an einem freien Ende des Bolzen-Systems zum verhindern der Translationsbewegung des Bolzen-Systems montiert ist.

2. Verbindungssatz nach Anspruch 1, **dadurch gekennzeichnet, dass** die Hauptschulter (13) eine abgeflachte ringförmige Form mit einer zentrale Öffnung (13a) und einem externen Rand (13d) aufweist, welcher dafür geeignet ist, mindestens teilweise in eine Nut (11c) im Hauptbolzen eingesetzt zu werden.

3. Verbindungssatz nach einem der Ansprüche 1 bis 2, **dadurch gekennzeichnet, dass** die Sekundärschulter (14) die Form einer Scheibe aufweist, die mit einer länglichen seitlichen Öffnung (14a) versehen ist, die aus dem Zentrum gebracht, und dafür geeignet ist, um das Blindende (12b) des Sekundärbolzens eingesetzt zu werden.

4. Verbindungssatz nach Anspruch 1, **dadurch gekennzeichnet, dass** die Hauptschulter (13) die Form eines Rings mit einer zentrale Öffnung (13a) und mindestens einer Unverwechselbarkeitseinrichtung (13f) zum Halten der Schulter (13) in einer Nut (11c) im Hauptbolzen aufweist.

5. Verbindungssatz nach Anspruch 1 oder 4, **dadurch gekennzeichnet, dass** die Sekundärschulter (14) die Form einer Scheibe mit einer zentralen Öffnung (14c) aufweist, deren Form der Form einer Blindfläche (12g) des Sekundärbolzens (12) entspricht.

6. Verbindungssatz nach einem der Ansprüche 1 bis 5, **dadurch gekennzeichnet, dass** der Sekundärbolzen eine Nut (12a) zur Aufnahme der Sekundärschulter (14) umfasst.

7. Verbindungssatz nach einem der Ansprüche 1 bis 6, **dadurch gekennzeichnet, dass** das Blindende (12b) des Sekundärbolzens (12) mindestens eine Abflachung (12f) umfasst , die dafür geeignet ist, in Kontakt gegen eine Abflachung (13e) der Hauptschulter (13) und/oder eine Abflachung (11g) des Hauptbolzens (11) zu kommen.

8. Verbindungssatz nach einem der Ansprüchen 1 bis 7, **dadurch gekennzeichnet, dass** der Verriegelungssatz (15, 16) eine um ein freies Ende (12a) des Sekundärbolzens (12) geschraubte Hauptmutter (15) und eine um das genannte freie Ende des Sekundärbolzens montierte Sekundärmutter (16) umfasst.

9. Verfahren zum Montieren eines Verbindungssatzes nach einem der Ansprüche 1 bis 8, **dadurch gekennzeichnet, dass** es die folgenden Verfahrensschritte umfasst, bei den:
- das Gabelgelenk (5) des Stiels in den Beschlag (6) des Flügels montiert wird,
- der Hauptbolzen (11) durch das Gabelgelenk und den Beschlag von einer Freifläche des Beschlags bis zu einer Blindfläche des genannten Beschlags verschieben wird,
- die Hauptschulter (13) um das Blindende des Hauptbolzens montiert wird,
- der Sekundärbolzen (12) innerhalb des Hauptbolzens verschieben wird,
- die Sekundärschulter (14) um das Blindende des Sekundärbolzens montiert wird,
- die Hauptmutter (15) um das freie Ende des Sekundärbolzens geschraubt wird, und
- der Sekundärmutter (16) um das freie Ende des Sekundärbolzens montiert wird.

10. Luftfahrzeug, **dadurch gekennzeichnet, dass** es einen Strahltriebwerkstiel umfasst, der unter einem Flügel mittels eines Verbindungssatzes nach einem der Ansprüche 1 bis 8 befestigt ist.

## Claims

1. Connecting assembly between a jet engine strut and an aircraft wing including:
- a fitting (6) integral with the wing, and
- a clevis (5) integral with the jet engine strut, the clevis (5) being fitted into and fixed to the fitting (6) by means of a through bolt system (10), comprising
- an external main bolt (11),
- a secondary bolt (12) mounted inside the main bolt,
**characterized in that** the bolt system (10) comprises:
- a main shoulder (13) directly mounted around the main bolt, at a dead end of the bolt system, to prevent said bolt from translating,
- a secondary shoulder (14) mounted around an end of the secondary bolt, at a dead end of the bolt system, to prevent the system from rotating,
- a locking assembly (15, 16) mounted around the main bolt and the secondary bolt, at a free end of the bolt system, to prevent the bolt system from translating.

2. Connecting assembly according to claim 1, **characterized in that** the main shoulder (13) has a flattened annular shape having a central opening (13a) and an external edge (13d) able to be inserted, at least partially, into a groove (11c) in the main bolt.

3. Connecting assembly according to any one of the claims 1 to 2, **characterized in that** the secondary shoulder (14) has the shape of a disc provided with an oblong side opening (14a) which is off-centered and able to be inserted around the dead end (12b) of the secondary bolt.

4. Connecting assembly according to claim 1, **characterized in that** the main shoulder (13) has the shape of a ring having a central opening (13a) and at least one locating bolt (13f) for holding the shoulder (13) in a groove (11c) in the main bolt.

5. Connecting assembly according to claim 1 or 4, **characterized in that** the secondary shoulder (14) has a disc shape provided with a central opening (14c) whose shape is complementary to that of a dead face (12g) of the secondary bolt (12).

6. Connecting assembly according to any one of the claims 1 to 5, **characterized in that** the secondary bolt comprises a groove (12a) able to receive the secondary shoulder (14).

7. Connecting assembly according to any one of the claims 1 to 6, **characterized in that** the dead end (12b) of the secondary bolt (12) comprises at least one flattening (12f) able to come in contact against a flattening (13e) of the main shoulder (13) and/or a flattening (11g) of the main bolt (11).

8. Connecting assembly according to any of claims 1 to 7, **characterized in that** the locking assembly (15, 16) comprises a main nut (15) screwed around a free end (12a) of the secondary bolt (12) and a secondary nut (16) mounted around said free end of the secondary bolt.

9. Method for mounting a connecting assembly according to any one of the claims 1 to 8, **characterized in that** it comprises the following operations:
- placing the clevis (5) of the strut into the fitting (6) of the wing,
- making the main bolt (11) slide through the clevis and the fitting from a free face of the fitting up to a dead face of said fitting,
- placing the main shoulder (13) around the dead end of the main bolt,
- making the secondary bolt (12) slide inside the main bolt,
- placing the secondary shoulder (14) around the dead end of the secondary bolt,
- screwing of the main nut (15) around the free end of the secondary bolt, and
- placing the secondary nut (16) around the free end of the secondary bolt.

10. Aircraft, **characterized in that** it comprises a jet engine strut fixed under a wing by means a connecting assembly according to any one of the claims 1 to 8.
